# EUROPEAN PATENT APPLICATION

(11) **EP 2 641 472 A1**
(43) Date of publication of application: **25.09.2013**
(21) Application number: 11841671.8
(22) Date of filing: 15.11.2011
(51) Int. Cl.: A23C 9/13, A23C 9/133

(54) **FERMENTED MILK WITH REDUCED SOURNESS AND METHOD FOR PRODUCING SAME**

(30) Priority: 18.11.2010 JP 2010257514
(71) Applicant: Meiji Co., Ltd., Koto-ku Tokyo 136-8908 (JP)
(72) Inventor: HORIUCHI Hiroshi, Odawara-shi Kanagawa 250-0862 (JP); INOUE Nobuko, Odawara-shi Kanagawa 250-0862 (JP); SAKAGUCHI Kumiko, Odawara-shi Kanagawa 250-0862 (JP)
(74) Representative: Pitchford, James Edward
(86) International application number: PCT/JP2011/076236
(87) International publication number: WO 2012/067081

(57) **Abstract**

[Problem] The purpose of the present invention is to provide: fermented milk which is reduced in the sourness coming from lactic acid and has a refreshing taste; and a method for producing the fermented milk.

[Solution] The present invention is essentially based on the finding that fermented milk that is reduced in the sourness coming from lactic acid and has a refreshing taste can be obtained by subjecting a fermentation starting material to lactic acid fermentation after adding a small amount of an acid component (an acidulant) that has a lower degree of sourness than lactic acid to the fermentation starting material. Specifically, 0.05-0.5% by weight (inclusive) of an acid component that has a lower degree of sourness than lactic acid is added to starting material milk when the total of the starting material milk and a lactic acid bacteria starter is taken as 100% by weight.

## Description

### Technical Field

The present invention relates to fermented milk in which the sourness is reduced and the flavor is fresh, which is obtained by the fermentation after the addition of a minute amount of acid component to a raw material mixture, and to a method for producing the same.

### Background Art

Fermented milk is generally classified into set type yogurt (solid fermented milk), soft yogurt (pasty fermented milk), and drink yogurt (liquid fermented milk). In each of these various yogurts, it is important to develop fermented milk with various flavors or textures according to the preference of the consumer in expanding the market of fermented milk. From this point of view, it is known that various measures are tried on the process of producing fermented milk.
In Japanese Patent Application Laid-Open No. 2000-316468 (Patent Literature 1), there is a disclosure of a method for producing a fermented milk beverage in which the fermentation flavor and stability are enhanced, by lactic acid fermentation of the fermentation starting material containing calcium salts.

### Citation List

### Patent Literature

Patent Literature 1: Japanese Patent Application Laid-Open No. 2000-316468

### Summary of Invention

### Technical Problem

In the method disclosed in Patent Literature 1, lactic acid fermentation can be facilitated, as a result, the flavor of lactic acid can be enhanced. Therefore, when fermented milk is produced by using this method, sourness derived from lactic acid is emphasized and thus the sourness may be enhanced.

In contrast, an object of the present invention is to provide fermented milk with a refreshing flavor in which the sourness derived from lactic acid is alleviated, and a method for producing the fermented milk.

### Solution to Problem

The present invention is basically based on the findings that a minute amount of acid component (acidulant) with a lower degree of sourness than that of lactic acid is added to raw material milk (yogurt mix), and then the resultant is subjected to lactic acid fermentation, as a result, the sourness derived from lactic acid is alleviated, and thus fermented milk with a refreshing flavor can be obtained.

The first aspect of the present invention relates to a method for producing fermented milk. This method for producing fermented milk includes a preparation step of preparing a fermentation starting material containing raw material milk and lactic acid bacteria starter, and a fermentation step of fermenting the fermentation starting material prepared in the preparation step. Further, in the preparation step, when the raw material milk is taken as 100% by weight, 0.05% by weight or more to 0.5% by weight or less of an acid component with a lower degree of sourness than that of lactic acid is added to the raw material milk.

The acid component is preferably organic acid, a salt of organic acid, or a solvate of organic acid, and more preferably any one of or two or more of phytic acid, gluconic acid, acetic acid, a salt thereof, and a solvate thereof.

Furthermore, a degree of acidity (pH) of the fermentation starting material is made 5.8 or more to 6.2 or less (weak acidity) in the preparation step, and then preferably the fermentation step is performed.

In addition, the fermented milk (final product) preferably contains a sweetener, pulp (fruit), a fruit sauce, a preparation, and the like. That is, in the present invention, the fermented milk in which the sourness is alleviated (reduced) is prepared as a base mixture, therefore, when the final product is obtained by the mixture of various kinds of auxiliary materials, the flavors of the fermented milk and the auxiliary materials become easily blended in to each other. Therefore, the present invention can be preferably used for soft yogurt and yogurt drinks, and particularly preferably used for yogurt desserts (for example, fruit yogurt).

The second aspect of the present invention relates to fermented milk. The fermented milk contains 0.05% by weight or more to 0.5% by weight or less of an acid component with a lower degree of sourness than that of lactic acid. The fermented milk is preferably produced by the production method described above, and as the acid component, preferably contains any one of or two or more of phytic acid, gluconic acid, acetic acid, a salt thereof, and a solvate thereof.

### Advantageous Effects of Invention

According to the present invention, an acid component contained in a fermentation starting material can appropriately suppress the lactic acid fermentation, therefore, the sourness derived from lactic acid is alleviated, and thus fermented milk with a refreshing flavor can be obtained.

### Best Mode for Carrying Out the Invention

Hereinafter, best mode for carrying out the present invention will be explained. The present invention relates to a method for producing fermented milk (yogurt), and fermented milk. Fermented milk and a method for producing fermented milk are widely known. In the present specification, all the techniques that are known to a person skilled in the art can be employed.

The first aspect of the present invention relates to a method for producing fermented milk. This method for producing fermented milk includes a preparation step of preparing a fermentation starting material containing raw material milk and lactic acid bacteria starter, and a fermentation step of fermenting the fermentation starting material prepared in the preparation step.

The preparation step is a step of preparing a fermentation starting material containing raw material milk and lactic acid bacteria starter. In the present invention, a fermentation starting material is obtained by mixing raw material milk (yogurt mix), lactic acid bacteria starter, and an acid component with one another. That is, when raw material milk is taken as 100% by weight, 0.05% by weight or more to 0.5% by weight or less of an acid component with a lower degree of sourness than that of lactic acid is added to prepare the fermentation starting material. At this time, after the addition of the acid component to raw material milk, lactic acid bacteria starter may be added, or after the addition of lactic acid bacteria starter to raw material milk, the acid component may be added. Further, after the mixture of acid component and lactic acid bacteria starter with each other, a mixture of the acid component and lactic acid bacteria starter may be added to raw material milk. However, when the acid component is added after the addition of lactic acid bacteria starter to raw material milk, the timing to add the lactic acid bacteria starter and the timing to add the acid component are preferably set to almost the same timing as each other before the addition of acid component in order not to progress the fermentation step. Further, the degree of sourness is a value expressed when citric acid is taken as 1. Furthermore, as indicated in Examples described later, the acid component with a lower degree of sourness than that of lactic acid is, for example, an acidulant used as a food additive, in which the degree of sourness (conversion ratio of citric acid) is lower than the degree of sourness (1.2) of lactic acid. In addition, the acid component is preferably organic acid, a salt of organic acid, or a solvate of organic acid, and more preferably any one of or two or more of phytic acid, gluconic acid, acetic acid, a salt thereof, and a solvate thereof. Further, as indicated in Examples described later, the content of acid component is preferably 0.05% by weight or more to 0.5% by weight or less, more preferably 0.1% by weight or more to 0.3% by weight or less, still more preferably 0.1 % by weight or more to 0.2% by weight or less.

As to the raw material milk and lactic acid bacteria starter, the ones that are usually used for the production of fermented milk can be used. The raw material milk contains, for example, in addition to milk, dairy products, milk proteins, and the like, one kind or two or more kinds of water, sugar, a saccharide, a sweetener, flavoring, gelatin, agar, pectin, and the like. The lactic acid bacteria starter is, for example, Lactobacillus bulgaricus (L. bulgaricus), Streptococcus thermophilus (S. thermophilus), and Lactobacillus lactis (L. lactis). On the other hand, when the fermented milk is produced by using Lactobacillus bulgaricus, or the lactic acid bacteria starter containing the Lactobacillus bulgaricus, the sourness derived from lactic acid tends to be increased. Therefore, the present invention can be preferably used for the production of fermented milk, by using particularly Lactobacillus bulgaricus, or the lactic acid bacteria starter containing the Lactobacillus bulgaricus. Further, in the present invention, when both of Lactobacillus bulgaricus (L.bulgaricus) and Streptococcus thermophilus (S.thermophilus) are used as the lactic acid bacteria starter, particularly the sourness derived from these lactic acid bacteria can be effectively prevented.

A preferred example of the present invention is to make the degree of acidity (pH) of the fermentation starting material 5.8 or more to 6.2 or less in a preparation step, and then to perform a fermentation step. In order to make the degree of acidity of the fermentation starting material 5.8 or more to 6.2 or less, of the acid component with a lower degree of sourness than that of lactic acid is added to the raw material milk or fermentation starting material described above, the degree of acidity may be adjusted. Further, the acid component with a lower degree of sourness than that of lactic acid is added to the raw material milk or fermentation starting material described above, and then the resultant is matured at room temperature (for example, 20°C or more to 30°C or less), as a result, the degree of acidity of fermentation starting material may be adjusted. Further, as indicated in Examples described later, the degree of acidity (pH) of fermentation starting material is preferably 5.8 or more to 6.2 or less, and more preferably 5.8 or more to 6 or less. An acid component is added to raw material milk (the pH is adjusted to around 5.8 to 6.0), and then the resultant is subjected to fermentation, as a result, in the fermentation step, the production rate of lactic acid by lactic acid bacteria is reduced. According to the above, during (refrigerated) storage of fermented milk, the increase of lactate concentration is suppressed, and thus the increase of sourness can be suppressed.

The fermented milk (final product) further contains preferably a sweetener, pulp (fruit), a fruit sauce, a preparation, and the like. That is, in the present invention, the fermented milk in which the sourness is alleviated (reduced) is prepared as a base mixture, therefore, when the final product is obtained by the mixture of various kinds of auxiliary materials, the flavors of the fermented milk and the auxiliary materials become easily blended in to each other. Therefore, the present invention can be preferably used for soft yogurt and yogurt drinks, and particularly preferably used for yogurt desserts (for example, fruit yogurt). In this case, the sourness of the fermented milk (yogurt) that is to be a base of fruit yogurt is reduced, therefore, without any interference to the flavor of fruit sauce, while the flavor from original yogurt is provided, the flavor of fruit sauce can be enhanced.

A fermentation step is a step of fermenting the fermentation starting material that is prepared in a preparation step. Example of fermentation temperature is 30°C or more to 50°C or less. The fermentation temperature may be 35°C or more to 45°C or less, 37°C or more to 43°C or less, or 40°C or more to 43°C or less.

The second aspect of the present invention relates to fermented milk. This fermented milk contains 0.05% by weight or more to 0.5% by weight or less of an acid component with a lower degree of sourness than that of lactic acid. The fermented milk is preferably produced by the production method described above, and as the acid component, preferably contains any one of or two or more of phytic acid, gluconic acid, acetic acid, a salt thereof, and a solvate thereof. That is, the fermented milk is produced by the production method described above, and the fermented milk in which the sourness is reduced is particularly preferred.

### [Example 1]

42.0 kg of raw milk, 8.0 kg of powdered skim milk (Meiji Dairies Corporation), and 5.0 kg of sugar (Meiji Food Materia Co., LTD.) were mixed with one another by using 45.0 kg of water. By performing as described above, raw material milk (yogurt mix) was obtained. The raw material milk was sterilized by heating at 95°C for 5 minutes, and then the resultant was cooled to 43°C.

Lactic acid bacteria starter (a mixed culture of Lactobacillus bulgaricus JCM1002T, and Streptococcus thermophilus ATCC 19258) was added to raw material milk so that the content of the lactic acid bacteria starter is 2% by weight. Taking the raw material milk (fermentation starting material) to which lactic acid bacteria starter was added, as 100% by weight, 0.15% by weight of phytic acid aqueous solution (50% by weight, Tsuno Food Industrial Co., Ltd.) was added. In addition, in a tank, the raw material milk mixture was fermented at 43°C. When the lactic acid acidity (degree of acid) reached around 0.85%, the yogurt card was cooled to 10°C or less while crushing, and thus fermented milk was prepared (produced). Further, the degree of acid was measured by titration with sodium hydroxide (0.1N) by using phenolphthalein as the indicator.

### [Comparative Example 1]

On the other hand, as a control product, fermented milk was prepared (produced) in the same manner as in Example 1 except for not adding phytic acid aqueous solution.

Fermented milk produced in Example 1 and Comparative Example 1 was (refrigerated) stored at 10°C for 25 days, and then the flavor of the resultant was evaluated by the sensory test. As a result of the sensory test, the sourness of the fermented milk in Example 1 was evaluated to be significantly lower than that of the fermented milk of Comparative Example 1.

### [Example 2]

At the composition in Table 1A, raw material milks in which the sourness components differ from each other were prepared, and samples 1-1 to 1-6 were obtained.

**[Table 1A]**

| Table 1A, Recipe for fermented milk (raw material milk) in which the kind of acidulant was changed | | | | | | | |
|---|---|---|---|---|---|---|---|
| Sample number | | (1- 1) | (1- 2) | (1- 3) | (1- 4) | (1- 5) | (1- 6) |
| Milk (Meiji Dairies Corporation) | [kg] | 78.00 | 78-00 | 78.00 | 78.00 | 78.00 | 78.00 |
| Powdered skim milk (Meiji Dairies Corporation) | [kg] | 1.70 | 1.70 | 1.70 | 1.70 | 1.70 | 1.70 |
| WPC34 (Fonterra Co-operative Group Limited) | [kg] | 0.15 | 0.75 | 0.75 | 0.75 | 0.75 | 0.75 |
| Lactic acid bacteria starter (for Meiji Bulgaria plain yogurt) | [kg] | 2.00 | 2.00 | 2.00 | 2.00 | 2.00 | 2.00 |
| Gluconic acid (50% by weight) by weight) | [kg] | 0.10 | 0.15 | | | 0.05 | 0.08 |
| Phytic acid (50% by weight) | [kg] | | | 0.10 | 0.15 | 0.05 | 0.08 |
| Water | [kg] | 17.55 | 17.55 | 17.55 | 17.55 | 17.55 | 17.55 |
| Total | [kg] | 100.10 | 100.15 | 100.10 | 100.00 | 100.10 | 100.15 |
| Fat Content | [% by weight] | 2.9 | 2.9 | 2.9 | 2.9 | 2.9 | 2.9 |
| Non-fat milk solids | [% by weight] | 9.4 | 9.4 | 9.4 | 9.4 | 9.4 | 9.4 |
| Total solids | [% by weight] | 12.3 | 12.3 | 12.3 | 12.3 | 12.3 | 12.3 |
| Degree of acid | [%] | 0.17 | 0.18 | 0.25 | 0.28 | 0.21 | 0.23 |

As indicated in Table 1A, samples 1-1 and 1-2 contained gluconic acid as the acid component. Samples 1-3 and 1-4 contained phytic acid as the acid component. Samples 1-5 and 1-6 contained gluconic acid and phytic acid as the acid component. The obtained samples 1-1 to 1-6 were fermented at 43°C. Fermentation time and the change of degree of acid of fermented milk (raw material milk) were shown in Table 1B.

**[Table 1B]**

| Table 1B. Change of degree of acid during fermentation (43°C) of fermented milk (raw material milk) in which the kind of acidulant was changed | | | | | | | |
|---|---|---|---|---|---|---|---|
| Sample number | | (1- 1) | (1- 2) | (1- 3) | (1- 4) | (1- 5) | (1- 6) |
| Relationship between degree of acid and fermentation time of fermentation milk (raw material milk) (fermentatlon temperature: 43°C) | | | | | | | |
| Degree of acid [%] | (Fermentation time: 0.0 h) | 0.17 | 0.18 | 0.25 | 0.28 | 0.21 | 0.23 |
| Degree of acid [%] | (Fermentation time: 1.0 h) | 0.20 | 0.22 | 0.26 | 0.30 | 0.24 | 0.27 |
| Degree of acid [%] | (Fermentation time: 2.0 h) | 0.38 | 0.36 | 0.43 | 0.45 | 0.41 | 0.43 |
| Degree of acid [%] | (Fermentation time: 2.5 h) | 0.54 | 0.55 | 0.57 | 0.58 | 0.54 | 0.56 |
| Degree of acid [%] | (Fermentation time: 3.0 h) | 0.67 | 0.65 | 0.67 | 0.67 | 0.66 | 0.68 |

From Table 1B, it was found that the degree of acid of all the samples 1-1 to 1-6 was 0.65 [%] or more to 0.68 [%] or less in 3 hours of fermentation time.

Next, the change of preservation state was examined for the fermented milk obtained through a fermentation step. Sample 1-4 was refrigerated at 10°C for a predetermined time, and then the degree of acid, the degree of acidity, and the number of the lactic acid bacteria were measured. Table 1C shows relationship between the preservation time and the degree of acid and degree of acidity. Table 1D shows relationship between the preservation time and the number of the lactic acid bacteria.

**[Table 1C]**

| Table 1C. Change of degree of acid and pH during refrigerated storage (10°C) of fermented milk | | | | | |
|---|---|---|---|---|---|
| Sample number | | (1-4) | Sample number | | (1-4) |
| Degree of acid of fermented milk | | | pH of fermented milk | | |
| Degree of acid [%] | (Preservation period: 1 d) | 0.78 | pH [-] | (Preservation period: 1 d) | 4.53 |
| Degree of acid [%] | (Preservation period: 9 d) | 1.00 | pH [-] | (Preservation period: 9 d) | 4.11 |
| Degree of acid [%] | (Preservation period: 14 d) | 1.06 | pH [-] | (Preservation period: 14 d) | 4.03 |

**[Table 1D]**

| Table 1D. Change of the number of lactic acid bacteria during refrigerated storage (10°C) of fermented milk | | | |
|---|---|---|---|
| Sample number | (1-4) | Sample number | (1-4) |
| The number of Lactobacillus bulgaricus of fermented milk | | The number of Streptococcus thermophilus of fermented milk | |
| The number of organism (× 10⁸) [cfu/ml] | 0.06 | The number of organism (× 10⁸) [cfu/m] | 3.70 |
| (Preservation period: 1 d) | 0.04 | (Preservation period: 1 d) | 5.20 |
| The number of organism (× 10⁸ cfu/ml] | 0.32 | The number of organism (× 10⁸) [cfu/ml] | 9.00 |
| (Preservation period: 9 d) | 0.34 | (Preservation period: 9 d) | 9.20 |
| The number of organism (× 10⁸ [cfu/ml] | 0.16 | The number of organism (× 10⁸) [cfu/m] | 7.40 |
| (Preservation period: 14 d) | 0.21 | (Preservation period: 14 d) | 9.40 |

From Table 1C, it was found that the degree of acid was slightly increased according to the refrigerated storage. Further, it was found that according to the refrigerated storage, the degree of acidity was slightly increased (pH was slightly decreased). In Table 1D, there were 2 kinds of samples. In sample 1-4, Lactobacillus bulgaricus that was contained at 0.06 × 10⁸ cfu/ml and 0.04 × 10⁸ cfu/ml after one day of the preservation, was increased to 0.32 × 10⁸ cfu/ml and 0.34 × 10⁸ cfu/ml, respectively after nine days of the preservation. From Table 1D, it was found that according to refrigerated storage, the number of the lactic acid bacteria was increased and the lactic acid bacteria did not die. That is, from this Example, it was found that the fermented milk obtained by the production method of the present invention was equivalent to conventional fermented milk in the quality of refrigerated storage and the like, and in addition, of which the sourness was reduced and the flavor did not change so much.

### [Example 3]

At the composition in Table 2A, raw material milks in which the sourness components differ from each other were prepared, and samples 2-1 to 2-3 were obtained. Sample 2-1 is a sample of conventional product, and sample 2-2 is a sample for control experiment. When comparing sample 2-2 with sample 2-3, it was found that despite the additive amount of acid component was large in sample 2-3, the degree of acidity of sample 2-3 was lower than that of sample 2-2. This is considered that the gluconic acid is the acid with a lower degree of acidity than that of lactic acid. The obtained samples 2-1 to 2-3 were fermented at 43°C. Fermentation time and change of degree of acid and degree of acidity of fermented milk (raw material milk) were shown in Table 2B.

**[Table 2A]**

| Table 2A. Recipe for Fermented milk (raw material milk) in which the kind of acidulant was changed | | | | |
|---|---|---|---|---|
| Sample number | | (2- 1) | (2- 2) | (2- 3) |
| Milk (Meiji Dairies Corporation) | [kg] | 78.00 | 78.00 | 78.00 |
| Powdered skim milk (Meiji Dairies Corporation) | [kg] | 1.70 | 1.70 | 1.70 |
| WPC34 (Domo) | [kg] | 0.75 | 0.75 | 0.75 |
| Lactic acid bacteria starter (for Meiji Bulgaria plain yogurt) | [kg] | 2.00 | 2.00 | 2.00 |
| Lactic acid (50% by weight) | [kg] | | 0.25 | |
| Gluconic acid (50% by weight) | [Kg] | | | 0.65 |
| Water | [kg] | 17.56 | 17.55 | 17.55 |
| Total | [kg] | 100.00 | 100.25 | 100.65 |
| Fat content | [% by weight ] | 2.9 | 2.9 | 2.9 |
| Non fat milk solids | [% by weight] | 9.4 | 9.4 | 9.4 |
| Total solids | [% by weight] | 12.3 | 12.3 | 12.3 |
| Degree of acid | [%] | 0.15 | 0.30 | 0.28 |
| pH | [-] | 6.67 | 5.89 | 5.99 |

**[Table 2B]**

| Table 2B. Change of degree of acid and pH during fermentation (43°C) of fermented milk (raw material milk) in which the kind of acidulant was changed | | | | |
|---|---|---|---|---|
| Sample number | | (2- 1) | (2- 2) | (2- 3) |
| Relationship between degree of acid and fermentation time of fermented milk (raw material milk) (Fermentation temperature: 43°C) | | | | |
| Degree of acid [%] | (Fermentation time: 0.0 h) | 0.15 | 0.30 | 0.28 |
| Degree of acid [%] | (Fermentation time: 1.0 h) | | 0.32 | 0.32 |
| Degree of acid [%] | (Fermentation time: 2.0 h) | | 0.42 | 0.50 |
| Degree of acid [%] | (Fermentation time: 2.5 h) | 0.59 | 0.53 | 0.65 |
| Degree of acid [%] | (Fermentation time: 3.0 h) | 0.66 | 0.63 | 0.72 |
| Degree of acid [%] | (Fermentaiion time: 3.2 h) | | 0.66 | |

| Relationship between pH and fermentation time of fermented milk (raw material milk) (fermentation temperature: 43°C) | | | | |
|---|---|---|---|---|
| pH [-] | (Fermentation time: 0.0 h) | 6.67 | 5.89 | 5.99 |
| pH [-] | (Fermentation time: 1.0 h) | | | |
| pH [-] | (Fermentation time: 2.0 h) | | | |
| pH [-] | (Fermentation time: 2.5 h) | | | 4.87 |
| pH [-] | (Fermentation time: 3.0 h) | 4.69 | 4.87 | 4.63 |
| pH [-] | (Fermentation time: 3.2 h) | | 4.75 | |

From Table 2B, it was found that the fermentation time of the fermented milk produced by the method for producing fermented milk of the present invention was almost equivalent to or slightly shorter than that of conventional products.

The change of preservation state was examined for the fermented milk obtained from the samples 2-1 and 2-3 after 3 hours of preservation, and from the sample 2-2 after 3.2 hours of preservation. Each fermented milk was refrigerated at 10°C for a predetermined time, and then the degree of acid, the degree of acidity, and the number of the lactic acid bacteria were measured. Table 2C shows relationship between the preservation time and the degree of acid and degree of acidity of fermented milk. Table 2D shows relationship between preservation time and the number of lactic acid bacteria of fermented milk.

**[Table 2C]**

| Table 2C. Change of degree of acid and pH during refrigerated storage (10°C) of fermented milk in which the kind of acidulant was changed | | | | |
|---|---|---|---|---|
| Sample number | | (2- 1) | (2- 2) | (2- 3) |
| Relationship between degree of acid and preservation time of fermented milk (storage temperature: 10°C) | | | | |
| Degree of acid [%] | (Preservation period: 0 d) | 0.66 | 0.66 | 0.65 |
| Degree of acid [%] | (Preservation period: 1 d) | 0.78 | 0.76 | 0.78 |
| Degree of acid [%] | (Preservation period: 7 d) | 0.98 | 0.90 | 0.96 |
| Degree of acid [%] | (Preservation period: 14 d) | 1.03 | 1.03 | 1.04 |

| Relationship between pH and preservation time of fermented milk (storage temperature: 10°C) | | | | |
|---|---|---|---|---|
| pH [-] | (Preservation period: 0 d) | 4.69 | 4.75 | 4.87 |
| pH [-] | (Preservation period: 1 d) | 4.45 | 4.47 | 4.44 |
| pH [-] | (Preservation period: 7 d) | 4.09 | 4.17 | 4.08 |
| pH [-] | (Preservation period: 14 d) | 4.03 | 1.02 | 3.99 |

**[Table 2D]**

| Table 2D. Change of the number of lactic acid bacteria during refrigerated storage (10°C) of fermented milk in which the kind of acidulant was change | | | |
|---|---|---|---|
| Sample number | (2- 1) | (2- 2) | (2- 3) |
| Relationship between the number of Lactobacillus bulgaricus and preservation time of fermented milk (storage temperature: 10°C) | | | |
| The number of organism (× 10⁸) [cfu/ml] | 3.20 | 2.20 | 1.80 |
| (Preservation period: 1 d) | 2.20 | 1.80 | 1.70 |
| The number of organism (× 10⁸ [cfu/ml] | 1.40 | 1.80 | 1.30 |
| (Preservation period: 7 d) | 1.00 | 2.00 | 0.90 |
| The number of organism (× 10⁸) [cfu/ml] | 0.01 | 0.60 | 0.13 |
| (Preservation period: 14 d) | 0.02 | 0.60 | 0.16 |

| Relationship between the number of Streptococcus thermophilus and preservation time of fermented milk temperature: 10°C) | | | |
|---|---|---|---|
| The number of organism (× 10⁸) [cfu/ml] | 8.80 | 6.60 | 7.50 |
| (Preservation period: 1 d) | 9.50 | 6.00 | 8.80 |
| The number of organism (× 10⁸) [cfu/ml] | 8.10 | 8.00 | 6.90 |
| (Preservation period: 7 d) | 10.60 | 6.70 | 6.30 |
| The number of organism (× 10⁸) [cfu/ml] | 11.60 | 6.50 | 7.90 |
| (Preservation period: 14 d) | 10.70 | 6.80 | 6.80 |

In addition, the results of sensory test were shown in Table 2E. From the results of sensory test, it was found that in the fermented milk (control experiment) produced by using sample 2-2, unique flavor was felt, and after 2 weeks of preservation, the sourness of the fermented milk was stronger than that of sample 2-1 (no addition of acid component). On the other hand, it was found that the sourness of the fermented milk produced by using sample 2-3 was weaker than that of the fermented milk produced by using raw material milk (sample 2-1) with no the addition of acid component, and even after 2 weeks of preservation, the sourness was weaker.

**[Table 2E]**

| Table 2E. Change of flavor during refrigerated storage (10°C) of fermented milk in which the kind of acidulant was changed | | |
|---|---|---|
| Sample number | | Sensory evaluation |
| (2- 2) | (Preservation period: 1 d) | The sourness was slightly weaker than that of sample (2 1). |
| | | Unique flavor was felt. |
| (2- 3) | (Preservation period: 1 d) | The sourness was slightly weaker than that of sample (2- 1). |
| (2- 2) | (Preservation period: 7 d) | The sourness was slightly weaker than that of sample (2- 1). |
| | | Unique aftertaste was felt. |
| (2- 3) | (Preservation period: 7 d) | The sourness equivalent to that of sample (2- 1). |
| (2- 2) | (Preservation period: 14 d) | The sourness slightly stronger than that of sample (2- 1). |
| (2- 3) | (Preservation period: 14 d) | The sourness was slightly weaker than that of sample (2- 1). |

### [Example 4]

At the composition in Table 3A, raw material milks in which the sourness components differed from each other were prepared, and samples 3-1 to 3-4 were obtained. Sample 3-1 is a sample of conventional product, and sample 3-2 is a sample for control experiment. When comparing sample 3-2 with sample 3-3, it was found that despite the additive amount of acid component was large in sample 3-3, the degree of acidity of sample 3-3 is almost equivalent to that of sample 3-2. This is considered that the gluconic acid is the acid with a lower degree of acidity than that of lactic acid. The obtained samples 3-1 to 2-3 were fermented at 43°C. Fermentation time and change of degree of acid and degree of acidity of fermented milk (raw material milk) were shown in Table 3B.

**[Table 3A]**

| Table 3A. Recipe for fermented milk (raw material milk) in which the kind of sourness component was changed | | | | | |
|---|---|---|---|---|---|
| Sample number | | (3- 1) | (3- 2) | (3- 3) | (3- 4) |
| Milk (raw milk) | [kg] | 78.00 | 78.00 | 78.00 | 78.00 |
| Powdered skim milk (Meiji Dairies Corporation) | [kg] | 1.70 | 1.70 | 1.70 | 1.70 |
| WPC34 (Domo) | [kg] | 0.75 | 0.75 | 0.75 | 0.75 |
| Lactic acid bacteria starter (for Meiji Bulgaria plain yogurt) | [kg] | 2.00 | 2.00 | 2.00 | 2.00 |
| Lactic acid (50% by weight) | [kg] | | 0.25 | | |
| Gluconic acid (50% by weight) | [kg] | | | 0.65 | |
| Phytic acid (50% by weight) | [kg] | | | | 0.15 |
| Water | [kg] | 17.55 | 17.55 | 17.55 | 17.55 |
| Total | [kg] | 100.00 | 100.25 | 100.65 | 100.15 |
| Fat content | [% by weight] | 2.9 | 2.9 | 2.9 | 2.9 |
| Non-fat milk solids | [% by weight] | 9.4 | 9.4 | 9.4 | 9.4 |
| Total solids | [% by weight] | 12.3 | 12.3 | 12.3 | 12.3 |
| Degree of acid | [%] | 0.15 | 0.28 | 0.30 | 0.28 |
| pII | [-] | 6.69 | 5.98 | 5.98 | 6.04 |

**[Table 3B]**

| Table 3B. Change of degree of acid and pH during fermentation (43°C) of fermented milk (raw material milk) in which the kind of acid component was changed | | | | | |
|---|---|---|---|---|---|
| Sample number | | (3- 1) | (3- 2) | (3- 3) | (3- 4) |
| Relationship between degree of acid and fermentation time of fermented milk (raw material milk) (fermentation temperature: 43°C) | | | | | |
| Degree of acid [%] | (Fermentation time: 0.0 h) | 0.15 | 0.28 | 0.30 | 0.28 |
| Degree of acid [%] | (Fermentation time: 1.0 h) | 0.17 | 0.31 | 0.32 | 0.29 |
| Degree of acid [%] | (Fermentation time: 2.0 h) | 0.28 | 0.37 | 0.50 | 0.39 |
| Degree of acid [%] | (Fermentation time: 2.5 h) | 0.43 | 0.44 | 0.56 | 0.49 |
| Degree of acid [%] | (Fermentation time: 3.0 h) | 0.59 | 0.57 | 0.68 | 0.62 |
| Degree of acid [%] | (Fermentation time: 3.3 h) | | | 0.70 | |
| Degree of acid [%] | (Fermentation time: 3.5 h) | 0.67 | 0.65 | | 0.70 |
| Degree of acid [%] | (Fermentation time: 4.0 h) | | 0.69 | | |

| Relationship between pH and fermentation time of fermented milk (raw material milk) (fermentation temperature: 43°C) | | | | | |
|---|---|---|---|---|---|
| pH [-] | (Fermentation time: 0.0 h) | 6.69 | 5.98 | 5.98 | 6.04 |
| pH [-] | (Fermentation time: 1.0 h) | 6.56 | 5.87 | 5.80 | 5.95 |
| pH [-] | (Fermentation time: 2.0 h) | 5.95 | 5.55 | 5.28 | 5.51 |
| pH [-] | (Fermentation time: 2.5 h) | 5.38 | 5.34 | 4.97 | 5.17 |
| pH [-] | (Fermentation time: 3.0 h) | 4.91 | 4.99 | 4.67 | 4.83 |
| pH [-] | (Fermentation time: 3.3 h) | | | 4.54 | |
| pH [-] | (Fermentation time: 3.5 h) | 4.69 | 4.73 | | 4.67 |
| pH [-] | (Fermentation time: 4.0 h) | | 4.50 | | |

From Table 3B, it was found that the fermentation time of the fermented milk produced by the method for producing fermented milk of the present invention was almost equivalent to that of conventional product, or was slightly reduced.

The change of preservation state was examined for the fermented milk obtained from the samples 3-1 and 3-4 after 3.5 hours of preservation, from the sample 3-2 after 3.3 hours of preservation, and from the sample 3-3 after 4 hours of preservation. Each fermented milk was refrigerated at 10°C for a predetermined time, and then the degree of acid, the degree of acidity, and the number of the lactic acid bacteria were measured. Table 3C shows relationship between preservation time and degree of acid and degree of acidity of fermented milk. Table 3D shows relationship between preservation time and the number of lactic acid bacteria of fermented milk.

**[Table 3C]**

| Table 3C. Change of degree of acid and pH during refrigerated storage (10°C) or fermented milk in which the kind of acid component was changed | | | | | |
|---|---|---|---|---|---|
| Sample number | | (3-1) | (3- 2) | (3-3) | (3-4) |
| Relationship between degree of acid and preservation time of fermented milk (storage temperature: 10°C) | | | | | |
| Degree of acid [%] | (Preservation period: 0 d) | 0.67 | 0.69 | 0.70 | 0.70 |
| Degree of acid [%] | (Preservation period: 1 d) | 0.86 | 0.79 | 0.80 | 0.82 |
| Degree of acid [%] | (Preservation period: 8 d) | 1.03 | 0.99 | 0.95 | 0.96 |
| Degree of acid [%] | (Preservation period: 14 d) | 1.09 | 1.05 | 1.07 | 1.08 |

| Relationship between pH and preservation time of fermented milk (storage temperature: 10 C) | | | | | |
|---|---|---|---|---|---|
| pH [-] | (Preservation period: 0 d) | 4.69 | 4.50 | 4.54 | 4.67 |
| pH [-] | (Preservation period: 1 d) | 4.31 | 4.39 | 4.35 | 4.40 |
| pH [-] | (Preservation period: 8 d) | 4.06 | 4.06 | 4.06 | 4.16 |
| pH [-] | (Preservation period: 14 d) | 4.05 | 4.04 | 4.02 | 4.07 |

**[Table 3D]**

| Table 3D. Change of the number of lactic acid bacteria during refrigerated storage (10°C) of fermented milk in which the kind of acid component was changed | | | | |
|---|---|---|---|---|
| Sample number | (3- 1) | (3- 2) | (3- 3) | (3- 4) |
| Relationship between the number of Lactobacillus bulgaricus and preservation time of fermented milk (storage temperature: 10°C) | | | | |
| The number of organism (× 10⁸) [cfu/ml] | 2.00 | 4.10 | 2.30 | 2.40 |
| (Preservation period: 1 d) | 1.30 | 3.20 | 2.50 | 1.10 |
| The number of organism (× 10⁸) [cfu/ml] | 2.00 | 2.80 | 1.80 | 1.60 |
| (Preservation period: 8 d) | 2.10 | 1.70 | 1.80 | 0.70 |
| The number of organism (× 10⁸) [cfu/ml] | 0.90 | 1.00 | 0.60 | 0.70 |
| (Preservation period: 14 d) | 1.40 | 1.70 | 1.00 | 1.30 |

| Relationship between the number of Streptococcus thermophilus and preservation time of fermented milk temperature: 10°C) | | | | |
|---|---|---|---|---|
| The number of organism (× 10⁸) [cfu/ml] | 2.30 | 2.90 | 2.70 | 2.00 |
| (Preservation period: 1 d) | 2.00 | 2.20 | 3.30 | 3.00 |
| The number of organism (× 10⁸) [cfu/ml] | 1.60 | 2.00 | 3.10 | 2.60 |
| (Preservation period: 8 d) | 2.20 | 2.40 | 3.20 | 3.50 |
| The number of organism (×10⁸) [cfu/ml] | 2.50 | 2.60 | 3.20 | 2.80 |
| (Preservation period: 14 d) | 2.40 | 2.90 | 3.10 | 2.60 |

In addition, the results of sensory test were shown in Table 3E. From the results of sensory test, it was found that the sourness of the fermented milk (control experiment) produced by using sample 3-2 did not differ so much from that of sample 3-1 (no addition of acid component). On the other hand, it was found that the sourness of the fermented milk produced by using sample 3-3 and the fermented milk produced by using sample 3-4 was weaker than that of the fermented milk produced by using raw material milk (sample 3-1) with no addition of acid component, and even after 2 weeks of preservation, the sourness was weaker.

**[Table 3E]**

| Table 3E. Change of flavor during refrigerated storage (10°C) of fermented milk in which the kind of acid component was changed | | |
|---|---|---|
| Sample number | | Sensory evaluation |
| (3- 2) | (Preservation period: 1d) | The sourness was equivalent to that of sample (3-1). |
| | | Unique aftertaste was felt. |
| (3- 3) | (Preservation period: 1d) | The sourness was slightly weaker than that of sample (3-1). |
| | | Unique aftertaste was felt. |
| (3- 4) | (Preservation period: 1d) | The sourness was slightly weaker than that of sample (3-1). |
| | | Unique aftertaste was felt. |
| (3- 2) | (Preservation period: 8d) | The sourness was slightly weaker than that of sample (3-1). |
| | | Unique aftertaste was not felt. |
| (3- 3) | (Preservation period: 8d) | The sourness was slightly weaker than that of sample (3 1). |
| | | Mild sourness was felt. |
| (3- 1) | (Preservation period: 8d) | The sourness was weaker than that of sample (3-1). |
| | | Mild sourness was felt. |
| (3- 2) | (Preservation period: 14d) | The sourness was equivalent to that of sample (3-1). |
| (3- 3) | (Preservation period: 14d) | The sourness was weaker than that of sample (3-1). |
| | | Slight bland was felt. |
| (3- 4) | (Preservation period: 14d) | The sourness was weaker than that of sample (3-1). |
| | | Mild aftertaste was felt. |

### Industrial Applicability

The present invention relates to a method for producing fermented milk, and fermented milk. Therefore, the present invention can be used in the food industry.

## Claims

1. A method for producing fermented milk, comprising:
a preparation step of preparing a fermentation starting material containing raw material milk and lactic acid bacteria starter, and
a fermentation step of fermenting the fermentation starting material prepared in the preparation step,
wherein the preparation step contains a step of adding 0.05% by weight or more to 0.5% by weight or less of an acid component with a lower degree of sourness than that of lactic acid to the raw material milk when the total of the raw material milk and the lactic acid bacteria starter is taken as 100% by weight.

2. The method for producing fermented milk according to claim 1,
wherein the acid component is organic acid, a salt of organic acid, or a solvate of organic acid.

3. The method for producing fermented milk according to claim 1,
wherein the acid component is any one of or two or more of phytic acid, gluconic acid, acetic acid, a salt thereof, and a solvate thereof.

4. The method for producing fermented milk according to claim 1,
wherein a degree of acidity of the fermentation starting material is made 5.8 or more to 6.2 or less in the preparation step, and then the fermentation step is performed.

5. The method for producing fermented milk according to claim 1,
wherein the fermented milk is fruit yogurt.

6. A fermented milk, comprising:
0.05% by weight or more to 0.5% by weight or less of an acid component with a lower degree of sourness than that of lactic acid.

7. The fermented milk, according to claim 6,
wherein the acid component is any one of or two or more of phytic acid, gluconic acid, acetic acid, a salt thereof, and a solvate thereof.
